# EUROPÄISCHE PATENTSCHRIFT

(11) **EP 0 634 632 B1**
(45) Veröffentlichungstag und Bekanntmachung des Hinweises auf die Patenterteilung: **02.09.1998**
(21) Anmeldenummer: 94110324.4
(22) Anmeldetag: 02.07.1994
(51) Int. Cl.: G01D 5/26

(54) **Gekapselte Messeinrichtung**
Covered measuring device
Dispositif de mesure encapsulé

(30) Priorität: 15.07.1993 DE 4323635
(43) Veröffentlichungstag der Anmeldung: 18.01.1995
(73) Patentinhaber: Dr. Johannes Heidenhain GmbH, D-83292 Traunreut (DE)
(72) Erfinder: Nelle, Günther, Dr., D-83346 Bergen (DE)

(56) Entgegenhaltungen:
- EP-A- 0 254 814
- EP-A- 0 348 660
- EP-A- 0 351 509

## Beschreibung

Die Erfindung bezieht sich auf eine gekapselte Meßeinrichtung gemäß dem Oberbegriff des Anspruches 1.

Bei gekapselten Meßeinrichtungen ist es erforderlich, im Gehäuse einen Schlitz vorzusehen, durch den ein Mitnehmer ins Innere des Gehäuses hineinragen kann, um die dort befindliche Baueinheit zum Abtasten einer Maßverkörperung mit dem außerhalb des Gehäuses angebrachten Montagefuß zu verbinden. Bei Relativbewegungen von beispielsweise Bett und Schlitten einer Maschine wird die Maschinenbewegung auf die Meßteilung der Maßverkörperung bzw. die Abtastbaueinheit übertragen, wobei der Mitnehmer innerhalb des Schlitzes in Bewegungsrichtung relativ verfahren und die Bewegung gemessen wird.

Zum Schutze der hochempfindlichen Meßteilung muß der Schlitz im Gehäuse möglichst gut verschlossen sein, und nur im Bereich des Mitnehmers soll eine Durchtrittsmöglichkeit zum Inneren des Gehäuses gegeben sein.

Eine derartige Meßeinrichtung zeigt die DE-PS 28 46 768, bei der ein Maßstab und eine Abtasteinheit in einem Hohlkörper eingebracht sind, der einen in Meßrichtung durchgehenden Schlitz aufweist, der mittels dachförmig angeordneter Dichtelemente in Form von Kunststoff- oder Gummilippen verschlossen ist, durch die ein Mitnehmer hindurchgreift, um die Abtasteinheit mit einem zu messenden Objekt zu verbinden.

Es wurde versucht, die Dichtwirkung zu erhöhen, indem man mehrere Dichtungen oder labyrinthartige Dichtungen eingesetzt hat. Derartige Dichtungen sind beispielsweise in der EP-A-0 254 814, EP-A-0 348 660, EP-A-0 351 509, DE-A-33 12 534 und der DE-C-38 40 791 - von der unsere Erfindung ausgeht - beschrieben. Diese Dichtungen haben den Nachteil, daß relativ viel Kraft zum Aufspreizen erforderlich ist, bzw. daß Reibung auftritt.

Der Erfindung liegt die Aufgabe zugrunde, eine Meßeinrichtung zu schaffen, bei der die Abdichtung des Gehäuseschlitzes mit einfachen Mitteln weiter verbessert wird, wobei insbesondere der Bereich des Mitnehmerdurchgriffes besser geschützt sein soll.

Die Aufgabe wird durch die Merkmale des Anspruches 1 gelöst.

Die Vorteile der erfindungsgemäßen abgedeckten Meßeinrichtung liegen darin, daß durch die labyrinthartige zusätzliche Abdichtung des Raumes zwischen Gehäuse und Montagefuß ein besonders guter Schutz gegen Medien erzielt wird, die gesprüht oder gespritzt angewendet werden . Durch die angepaßte Formgebung der zusätzlichen Dichtelemente bleibt dieser Effekt auch beim örtlichen Durchgriff des Mitnehmers durch die dachförmigen Dichtelemente erhalten.

Mit Hilfe der Zeichnungen soll anhand von Ausführungsbeispielen die Erfindung noch näher erläutert werden.

Es zeigen
- Figur 1: einen schematischen Querschnitt durch eine Längenmeßeinrichtung;
- Figur 2: einen schematischen Querschnitt durch die leicht variierte Längenmeßeinrichtung gemäß Figur 1 mit Mitnehmer;
- Figur 3 bis 7: verschiedene Ausführungsbeispiele und
- Figur 8: eine Längsansicht einer Längenmeßeinrichtung.

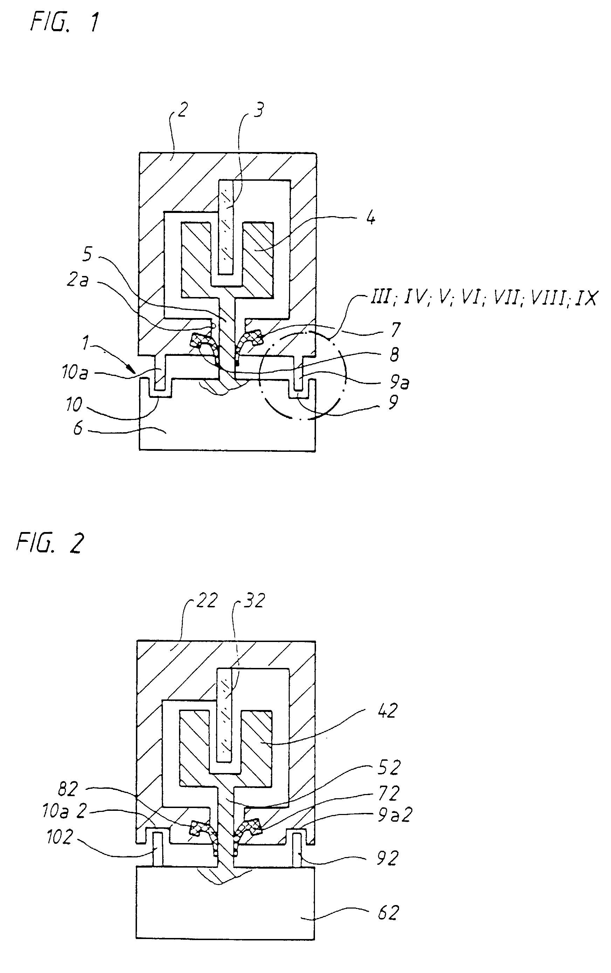

Eine in Figur 1 schematisch dargestellte Längenmeßeinrichtung 1 besteht aus einem Gehäuse 2, in dem ein Meßteilungs-Trägerkörper 3 in bekannter Weise befestigt ist. Das Gehäuse 2 ist geschnitten dargestellt, so daß eine Abtasteinrichtung 4 sichtbar wird. Die Abtasteinrichtung 4 tastet in ebenfalls bekannter Weise photoelektrisch eine Meßteilung (nicht dargestellt) ab, die auf dem Meßteilungs-Trägerkörper 3 aufgebracht ist. Ein Mitnehmer 5, der den Querschnitt eines zweiseitigen Schwertes hat, verbindet die Abtasteinrichtung 4 mit einem Montagefuß 6. Der Mitnehmer 5 durchragt einen Längsschlitz 2a im Gehäuse 2, der durch V-förmig angeordnete Dichtlippen 7 und 8 abgedichtet ist.

Oftmals wird die Anordnung der Dichtlippen 7, 8 als dachförmig beschrieben - diese Bezeichnungs- und Betrachtungsweise ist natürlich von der Anbaulage der Positionsmeßeinrichtung 1 abhängig.

Im Bereich des Mitnehmers 5 sind am Montagefuß 6 weitere Dichtungen 9 und 10 vorgesehen, die mit korrespondierenden Ausformungen 9a, 10a am Gehäuse 2 eine Art Labyrinth bilden, so daß im Bereich des Montagefußes 6 ein zusätzlicher Spritzschutz besteht.

In Figur 2 ist die geometrische Umkehr gezeigt, dort sind die Ausformungen 9a2, 10a2 im Gehäuse 22 negativ ausgeführt, in welche Dichtungsstege 92, 102 eingreifen, die am Montagefuß 62 angeordnet sind. Die labyrinthartige Dichtwirkung ist äquivalent der gemäß Figur 1.

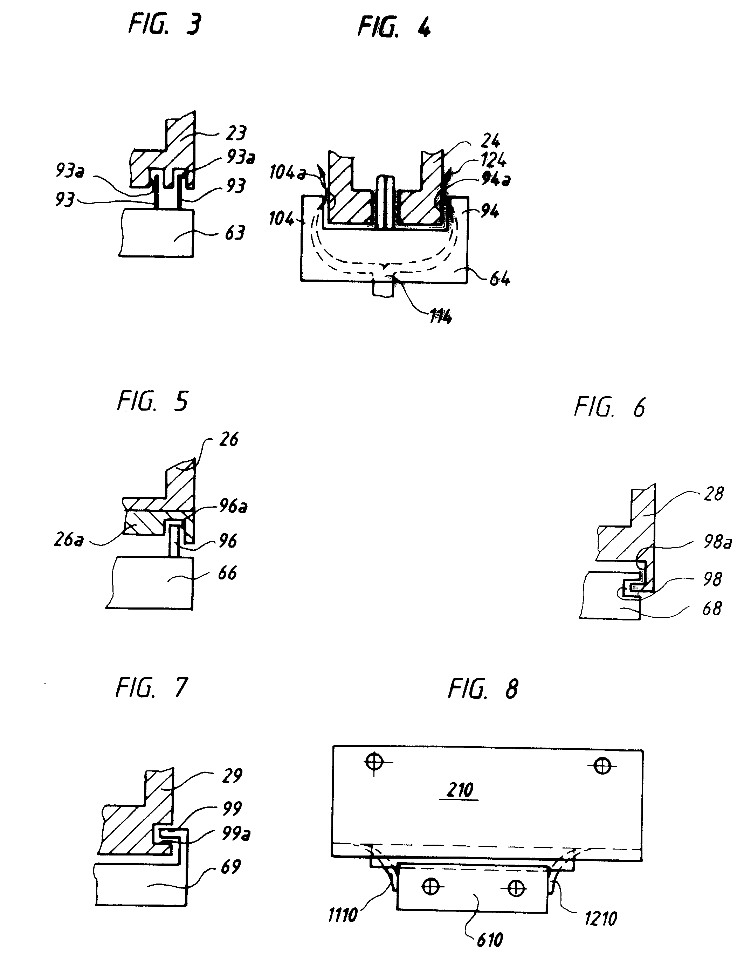

Weitere Ausführungsbeispiele sind in Figur 3 bis 7 gezeigt, die als Einzelheiten III; IV; V; VI; VII; extrahiert dargestellt sind, wobei auf sich wiederholende Details gemäß Figur 1 und 2 verzichtet wurde. Ebenso wurde auf eine zeichnerische Darstellung nach den Regeln des technischen Zeichnens verzichtet, da nur die Vielzahl der Variationen der zusätzlichen Dichtung vermittelt werden soll, die aber durch diese Aufstellung keineswegs begrenzt wird.

Figur 3 zeigt Vorsprünge 93 am Montagefuß 63, die in Mehrfach-Anordnung in mehrfache, schlitzartige Aussparungen 93a im Gehäuse 23 eingreifen. Diese Vorsprünge 93 können als separat montierbare Bauteile in Stegform sowohl im Montagefuß 63 - oder nicht gezeigt, im Hohlkörper - angeordnet sein. Die jeweils korrespondierenden Ausformungen sind dementsprechend im jeweils anderen Bauteil vorgesehen.

In Figur 4 ist eine der einfachsten Bauformen einer zusätzlichen Dichtung 94, 94a; 104, 104a dargestellt. Die Dichtwirkung kann verbessert werden, wenn über Kanäle 114 ein strömendes Medium 124 wie Luft oder Stickstoff in die Außenbereiche des Montagefußes 64 geblasen wird.

In Figur 5 ist eine Variante gezeigt, bei der auf das standardmäßige Gehäuse 26 ein separates Bauteil 26a aufgesetzt wird, in welchem der Dichtungsschlitz 96a verläuft. Diese Möglichkeit wurde bereits anhand der Figur 3 erwähnt.

Die Figuren 6 und 7 zeigen Labyrinthdichtungen, 98, 98a und 99, 99a, die in gleicher Weise arbeiten, und deren Labyrinthe selbstverständlich vervielfachbar sind.

Die Vielfalt der aufgezeigten Möglichkeiten macht deutlich, daß nicht die spezielle Bauform die Erfindung ausmacht, sondern das Merkmal, daß neben der den Mitnehmer 5 umschließenden, berührenden Dichtung 7, 8 eine zusätzliche Dichtung im Raum zwischen Gehäuse 2 und Montagefuß 6 vorgesehen ist, die den Dichtungsbereich abschirmt, in welchem der Mitnehmer 5 die dachförmigen Dichtlippen 7 und 8 örtlich durchgreift.

Aus Figur 8 wird ferner deutlich, daß auch im stirnseitigen Bereich des Montagefußes 610 zusätzliche Dichtungen 1110, 1210 vorgesehen sind, mit denen nach Art von Abstreifern, die an die Querschnittsform des Gehäuses 210 angepaßt sind, die gesamte Abdichtung im näheren Umfeld des Mitnehmers nochmals verbessert wird.

## Patentansprüche

1. Gekapselte Meßeinrichtung zur Bestimmung der Relativlage zweier Objekte, mit
- einer Maßverkörperung (3), die zusammen mit der sie abtastenden Abtasteinheit (4) in einem Hohlkörper (2; 22; 23; 26; 28; 29) eingebracht ist;
- einem Mitnehmer (5) zur Verbindung der Abtastbaueinheit (4) an einem der zu messenden Objekte über einen Montagefuß (6; 62; 63; 66; 68; 69),;
- einer berührend arbeitenden Dichtung aus flexiblen Dichtlippen (7, 8) mit welcher der Hohlkörper (2; 22; 23; 26; 28; 29) abgedichtet ist, und zwischen denen der Mitnehmer (5) hindurchgreift, so daß die Dichtung (7, 8) den Mitnehmer (5) berührend umschließt;
- einer zusätzlichen Dichtung (9, 9a; 10, 10a), die außerhalb des Bereiches wirkt, in dem der Mitnehmer (5) durch seine berührende Dichtung (7, 8) greift, **dadurch gekennzeichnet, daß**
- die zusätzliche Dichtung (9, 9a; 10, 10a) den Raum zwischen der berührenden Dichtung (7, 8) und dem Montagefuß (6; 62; 63; 66; 68; 69) gegen störende Umwelteinflüsse abschirmt,
- die zusätzliche Dichtung (9, 9a; 10, 10a) eine labyrinthartige berührungsfreie Dichtung in Form von beidseitig des Mitnehmers (5) angeordneten ineinandergreifenden Stegen (9a, 10a; 92, 102; 93; 96; 98a; 99) und schlitzartigen Aussparungen (9, 10; 9a2, 10a2; 93a; 96a; 98; 99a) entlang des Hohlkörpers (2; 22; 23; 26; 28; 29) und des Montagefußes (6; 62; 63; 66; 68; 69) ist, die den Umwelteinflüssen ausgesetzt ist.

2. Meßeinrichtung nach Anspruch 1, dadurch gekennzeichnet, daß die Stege (9a, 10a; 98a) durch Vorsprünge am Hohlkörper (2; 28) gebildet sind, die nach Art einer Verzahnung in schlitzartige Aussparungen (9, 10; 98) im Montagefuß (6; 68) eingreifen.

3. Meßeinrichtung nach Anspruch 1, dadurch gekennzeichnet, daß die Stege (92, 102; 93; 96; 99) durch Vorsprünge am Montagefuß (62; 63; 66; 69) gebildet sind, die nach Art einer Verzahnung in schlitzartigen Aussparungen (9a2, 10a2; 93a; 96a; 99a) im Hohlkörper (22; 23; 26; 29) eingreifen.

4. Meßeinrichtung nach einem der Ansprüche 1 bis 3, dadurch gekennzeichnet, daß die Stege (93) als gesondertes Bauteil in den Hohlkörper oder den Montagefuß (63) eingesetzt sind.

5. Meßeinrichtung nach Anspruch 1, dadurch gekennzeichnet, daß im stirnseitigen Bereich des Montagefußes (610) weitere Dichtungen (11, 12) nach Art von Abstreifern vorhanden sind.

6. Meßeinrichtung nach einem der Ansprüche 1 bis 5, dadurch gekennzeichnet, daß die flexiblen Dichtlippen (7, 8) am Hohlkörper (2; 22; 23; 26; 28; 29) V-Förmig angeordnet sind.

## Claims

1. An encapsulated measuring device for determining the relative position between two objects, with
- a measuring body (3), which is fitted in a hollow body (2; 22; 23; 26; 28; 29) together with a sensing unit (4) sensing the measuring body,
- a driver (5) for connecting the sensing unit (4) to one of the objects to be measured via a mounting foot (6; 62; 63; 66; 68; 69);
- a seal operating in contact, with flexible sealing lips (7, 8), with which the hollow body (2; 22; 23; 26; 28; 29) is sealed, and between which the driver (5) engages, so that the seal (7, 8) surrounds the driver (5) in contact therewith;
- an additional seal (9, 9a; 10, 10a) which acts outside the region in which the driver (5) engages through its contacting seal (7, 8), characterized in that
- the additional seal (9, 9a; 10, 10a) shields the space between the contacting seal (7, 8) and the mounting foot (6; 62; 63; 66; 68; 69) against detrimental environmental effects,
- the additional seal (9, 9a; 10, 10a) is a labyrinth-like contact-free seal in the form of webs (9a, 10a; 92,102; 93; 96; 98a; 99) and slot-like recesses (9, 10; 9a2, 10a2; 93a; 96; 98a; 99a) arranged on both sides ofthe drive (5) along the hollow body (2; 22; 23; 26; 28; 29) and the mounting foot (6; 62; 63; 66; 68; 69), which is subject to environmental effects.

2. A measuring device according to claim 1, characterized in that the webs (9a, 10a; 98a) are formed by projections on the hollow body (2; 28), which engage in the manner of teeth in slot-like recesses (9, 10;98) in the mounting foot (6; 68).

3. A measuring device according to claim 1, characterized in that the webs (92,102; 93; 96; 99) are formed by projections on the mounting foot (62; 63; 66; 69), which engage in the manner of teeth in slot-like recesses (9a2, 10a2; 93a; 96a; 99a) in the hollow body (22; 23; 26; 29).

4. A measuring device according to any of claims 1 to 3, characterized in that the webs (93) are fitted as separate components in the hollow body or the mounting foot (63).

5. A measuring device according to claim 1, characterized in that further seals (1110, 1210) in the form of strippers are provided in the end region of the mounting foot (610).

6. A measuring device according to any of claims 1 to 5, charactenzed in that the flexible sealing lips (7, 8) are arranged in V-form on the hollow body (2; 22; 23; 26; 28; 29).

## Revendications

1. Dispositif de mesure fermé pour déterminer la position relative de deux objets, avec
- une mesure matérialisée (3) qui, avec l'unité de balayage (4) qui la palpe, est logée dans un élément creux (2; 22; 23; 26; 28; 29);
- un entraîneur (5) pour relier l'unité de balayage (4) à l'un des objets à mesurer par l'intermédiaire d'un bloc de montage (6; 62; 63; 66; 68; 69);
- un joint agissant par contact, formé de lèvres d'étanchéité (7, 8) flexibles, par lequel l'élément creux (2; 22; 23; 26; 28; 29) est fermé de manière étanche et entre les lèvres duquel passe l'entraîneur (5), de telle sorte que le joint (7, 8) entoure avec contact l'entraîneur (5);
- un joint (9; 9a; 10; 10a) supplémentaire qui agit à l'extérieur de la zone dans laquelle l'entraîneur (5) passe à travers le joint (7, 8),
caractérisé par le fait que
- le joint supplémentaire (9; 9a; 10; 10a) protège l'espace entre le joint à contact (7, 8) et le bloc de montage (6; 62; 63; 66; 68; 69) vis-à-vis des influences extérieures perturbatrices,
- le joint supplémentaire (9, 9a, 10, 10a) est un joint sans contact, de type labyrinthe, sous la forme de nervures (9a, 10a; 92, 102; 93; 96; 98a; 99) et d'évidements en forme de fentes (9, 10; 9a2, 10a2; 93a; 96a; 98; 99a) qui s'interpénètrent et sont disposés de part et d'autre de l'entraîneur (5) le long de l'élément creux (2; 22; 23; 26; 28; 29) et du bloc de montage (6; 62; 63; 66; 68; 69), lequel joint est exposé aux influences extérieures.

2. Dispositif de mesure selon la revendication 1, caractérisé par le fait que les nervures (9a, 10a, 98a) sont formées par des saillies sur l'élément creux (2; 28) qui pénètrent à la manière d'une denture dans des évidements (9, 10; 98) en forme de fentes dans le bloc de montage (6, 68).

3. Dispositif de mesure selon la revendication 1, caractérisé par le fait que les nervures (92; 102; 93; 96; 99) sont formées par des saillies sur le bloc de montage (62; 63; 66; 69) qui pénètrent à la manière d'une denture dans des évidements (9a2; 10a2; 93a; 96a; 99a) en forme de fentes dans l'élément creux (22; 23; 26; 29).

4. Dispositif de mesure selon une des revendications 1 à 3, caractérisé par le fait que les nervures (93) sont montées en tant qu'élément de construction séparé dans l'élément creux ou dans le bloc de montage (63).

5. Dispositif de mesure selon la revendication 1, caractérisé par le fait que des joints (11, 12) supplémentaires de type racleur sont prévus dans la région frontale du bloc de montage (610).

6. Dispositif de mesure selon une des revendications 1 à 5, caractérisé par le fait que les lèvres d'étanchéité flexibles (7, 8) sur l'élément creux (2; 22; 23; 26; 28; 29) sont disposées en V.
